# EUROPEAN PATENT APPLICATION

(11) **EP 1 887 072 A1**
(43) Date of publication of application: **13.02.2008**
(21) Application number: 06118700.1
(22) Date of filing: 10.08.2006
(51) Int. Cl.: C10G 2/00, C01B 3/52

(54) **a process for the treatment of fischer-tropsch tail gas**

(71) Applicant: SHELL INTERNATIONALE RESEARCH MAATSCHAPPIJ B.V., 2596 HR Den Haag (NL)
(72) Inventor: Hoek, Arend, 1031 CM Amsterdam (NL); Kueh, Lip Piang, 97008 Bintulu Sarawak (MY); Rots, Pascal Edzo Armin, 50088 Kuala Lumpur (MY)
(74) Representative: Zeestraten, Albertus W. J.

(57) **Abstract**

A process for the treatment of Fischer-Tropsch tail gas comprising hydrocarbons, the process comprising: contacting the Fischer-Tropsch tail gas with a wash fluid; removing the wash fluid and a portion of the hydrocarbons in the tail gas, in a first stream; removing the remaining tail gas in a second separate stream; separating said tail gas component from the first stream. In a preferred embodiment C₅ and C₆ components are recovered from the tail gas. The wash fluid preferably comprises hydrocarbons produced by the same Fischer-Tropsch process.

## Description

This invention relates to a process for the treatment of Fischer-Tropsch tail gas, particularly the removal of C₃-C₉ components from the Fischer-Tropsch Tail gas.

Many documents are known describing methods and processes for the catalytic conversion of (gaseous) hydrocarbonaceous feedstocks, especially methane, natural gas and/or associated gas, into liquid products, especially methanol and liquid hydrocarbons, particularly paraffinic hydrocarbons.

The Fischer-Tropsch process can be used for the conversion of synthesis gas (from hydrocarbonaceous feed stocks) into liquid and/or solid hydrocarbons. Generally, the feed stock (e.g. natural gas, associated gas and/or coal-bed methane, heavy and/or residual oil fractions, coal, biomass) is converted in a first step into a mixture of hydrogen and carbon monoxide (this mixture is often referred to as synthesis gas or syngas). The synthesis gas is then fed into one or more reactors where it is converted in one or more steps over a suitable catalyst at elevated temperature and pressure into paraffinic compounds ranging from methane to high molecular weight modules comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi-tubular fixed bed reactors, fluidised bed reactors, such as entrained fluidised bed reactors and fixed fluidised bed reactors, and slurry bed reactors such as three-phase slurry bubble columns and ebulated bed reactors.

Usually, four main products streams are recovered from a Fischer-Tropsch process: a gaseous stream which on cooling results in light hydrocarbons, impure water, Fischer-Tropsch tail gas, also referred to as Fischer-Tropsch off-gas, and optionally a waxy hydrocarbon stream. The tail gas comprises unconverted synthesis gas, light C₁-C₄ hydrocarbons, CO₂, a certain amount of C₃-C₉ hydrocarbons, especially C₅-C₆ hydrocarbons, H₂O and inerts such as N₂ and Ar.

As noted above the tail gas comprises carbon components. To make use of the unconverted synthesis gas, the tail gas may be recycled by reintroduction into the Fischer-Tropsch reactor. However the presence of inerts in the tail gas prevents it from being completely recycled since the inerts would accumulate and adversely affect the production of hydrocarbons in the Fischer-Tropsch reactor. Therefore a portion of the Fischer-Tropsch tail gas is removed from the Fischer-Tropsch process. This tail gas may be used as a fuel for furnaces and then disposed of.

An object of the present invention is to separate certain components from tail gas.

A process for the treatment of Fischer-Tropsch tail gas comprising hydrocarbons, the process comprising:
- contacting the Fischer-Tropsch tail gas with a wash fluid,
- removing the wash fluid and a portion of the hydrocarbons in the tail gas, in a first stream;
- removing the remaining tail gas in a second separate stream;
- separating said tail gas component from the first stream.

Preferably the Fischer-Tropsch ("FT") tail gas is cooled in a first stage and preferably cooled in a second stage.

Preferably the cooling stages are upstream of the contact between the tail gas and the wash fluid.

The first stage cooling may be high temperature cooling. The first stage cooling may cool the FT tail gas by 50-200 °C, preferably 80-100 °C.

The temperature of the syngas before the first stage cooling may be 180-280 °C, preferably 210-260 °C.

The second stage cooling may be low temperature cooling. The second stage cooling may cool the FT tail gas by 20-130 °C, preferably 50-90 °C.

The temperature of the syngas before the second stage may be 100-160 °C, preferably 120-140 °C.

In a further embodiment, there is a third stage cooling, which may be at 0-40 °C, preferably 10-30 °C.

The FT tail gas may comprise unconverted synthesis gas, light C₁-C₄ hydrocarbons, CO₂, a certain amount of C₃-C₉ hydrocarbons, especially C₅-C₆ hydrocarbons, H₂O and inerts such as N₂ and Ar. Further, oxygenated compounds, e.g. methanol, dimethyl ether, may be present in the tail gas.

Preferably the FT tail gas is contacted with the wash fluid in a scrubber. The FT tail gas may be at a temperature of 0-50 °C, preferably 10-40 °C when it enters the scrubber.

Preferably the pressure of the FT tail gas is 1-80 bar, preferably 20-70 bar.

Preferably the scrubber is adapted to provide maximum contact between the FT tail gas and the wash fluid with minimum pressure drop.

Preferably the pressure during the contacting step is the same as the FT tail gas pressure.

The wash fluid typically comprises hydrocarbons. Preferably the wash fluid comprises C₅-C₂₀ hydrocarbons, more preferably C₈-C₂₀, even more preferably C₁₀-C₂₀.

The wash fluid is preferably kerosene or gasoil. Preferably the wash fluid is not naphtha.

Preferably the initial boiling point of the wash fluid is higher than 80 °C, more preferably higher than 100 °C. The higher the initial boiling point of the wash fluid the easier it is to separate the FT tail gas component from the wash fluid.

The wash fluid may be circulated through the scrubber more than once. Preferably a bleed stream is provided to remove a portion of the wash fluid on each cycle. Preferably a make-up stream is provided to add a portion of the wash fluid on each cycle.

Typically the FT tail gas passes through the scrubber only once.

Preferably at least 70 wt%, more preferably at least 90 wt% of C₃-C₉ hydrocarbon in the FT tail gas stream are removed from the tail gas by being removed from the scrubber in the first stream. Preferably at least 70 wt%, more preferably at least 90 wt% of the C₄-C₇ hydrocarbons in the FT tail gas stream are removed in the process.

The amount of hydrocarbons removed from the tail gas stream may be increased by lowering the temperature in the scrubber or by increasing intensity or by increasing amount of wash fluid with respect to the FT tail gas stream.

C₃ and C₄ components may also optionally be removed in the first stream.

A separation unit, such as a distillation unit, is preferably provided to separate the wash fluid from the tail gas component in the first stream. Strippers, flashers or any other suitable separation units may also be used.

Preferably the separating is performed at a lower pressure than the contacting step. Preferably the pressure during the separating step is 1-20 bar, more preferably 1-5 bar, especially around 1 bar.

Any unsaturated components within the recovered tail gas component may be subsequently hydrogenated.

The process may include the production of C₅+ hydrocarbons. Preferably the process to produce C₅+ hydrocarbons is by reaction of hydrogen with carbon monoxide, more preferably by a Fisher Tropsch process.

Preferably the wash fluid is produced by the process, preferably after a hydrocracking and/or a hydrogenation step.

Preferably the amount of C₅-C₉ components recovered in the first stream is 1-3% of total C₅+ output of the process.

The remaining FT tail gas may be utilized for the production of electrical power, in an expanding/ combustion process such as in a gas turbine, burner fuel or recycled to a syngas production process. The energy generated in the process may be used for own use or for export to local customers. Part of the energy could be used for the compression of an oxygen containing gas.

Hydrogen may be separated from the tail gas. The hydrogen is preferably separated after quenching/cooling, and may be separated by techniques well known in the art, as pressure swing adsorption, or, preferably, by means of membrane separation techniques. The hydrogen may then be injected into the Fischer-Tropsch reactor(s). In this way a further product yield optimization is obtained (for instance by fine tuning the H₂/CO ratios in the Fischer-Tropsch reactors), while also the carbon efficiency can be improved.

In addition, the product quality may be improved by using the hydrogen for hydrogenation and/or hydrocracking.

The Fischer-Tropsch process is well known to those skilled in the art and involves synthesis of hydrocarbons from syngas, by contacting the syngas at reaction conditions with a Fischer-Tropsch catalyst.

The synthesis gas can be provided by any suitable means, process or arrangement. This includes partial oxidation and/or reforming of a hydrocarbonaceous feedstock as is known in the art.

Typically the synthesis gas is produced by partial oxidation of a hydrocarbonaceous feed. The hydrocarbonaceous feed suitably is methane, natural gas, associated gas or a mixture of C₁₋₄ hydrocarbons. The feed comprises mainly, i.e. more than 90 v/v%, especially more than 94%, C₁₋₄ hydrocarbons, especially comprises at least 60 v/v percent methane, preferably at least 75 percent, more preferably 90 percent. Very suitably natural gas or associated gas is used. Suitably, any sulphur in the feedstock is removed.

The partial oxidation of gaseous feedstocks, producing mixtures of especially carbon monoxide and hydrogen, can take place according to various established processes. These processes include the Shell Gasification Process. A comprehensive survey of this process can be found in the Oil and Gas Journal, September 6, 1971, pp 86-90.

The oxygen containing gas for the partial oxidation typically contains at least 95 vol.%, usually at least 98 vol.%, oxygen. Oxygen or oxygen enriched air may be produced via cryogenic techniques, but could also be produced by a membrane based process, e.g. the process as described in WO 93/06041. A gas turbine can provide the power for driving at least one air compressor or separator of the air compression/separating unit. If necessary, an additional compressing unit may be used after the separation process, and the gas turbine in that case may also provide at the (re)start power for this compressor. The compressor, however, may also be started at a later point in time, e.g. after a full start, using steam generated by the catalytic conversion of the synthesis gas into hydrocarbons.

To adjust the H₂/CO ratio in the syngas, carbon dioxide and/or steam may be introduced into the partial oxidation process. Preferably up to 15% volume based on the amount of syngas, preferably up to 8% volume, more preferable up to 4% volume, of either carbon dioxide or steam is added to the feed. Water produced in the hydrocarbon synthesis may be used to generate the steam. As a suitable carbon dioxide source, carbon dioxide from the effluent gasses of the expanding/combustion step may be used. The H₂/CO ratio of the syngas is suitably between 1.5 and 2.3, preferably between 1.6 and 2.0. If desired, (small) additional amounts of hydrogen may be made by steam methane reforming, preferably in combination with the water gas shift reaction. Any carbon monoxide and carbon dioxide produced together with the hydrogen may be used in the gasification and/or hydrocarbon synthesis reaction or recycled to increase the carbon efficiency. Hydrogen from other sources, for example hydrogen itself, may be an option.

The syngas comprising predominantly hydrogen, carbon monoxide and optionally nitrogen, carbon dioxide and/or steam is contacted with a suitable catalyst in the catalytic conversion stage, in which the hydrocarbons are formed. Suitably at least 70 v/v% of the syngas is contacted with the catalyst, preferably at least 80%, more preferably at least 90%, still more preferably all the syngas.

The Fischer-Tropsch synthesis is preferably carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

The Fischer-Tropsch tail gas may be added to the partial oxidation process, in particular tail gas downstream of the second cooler.

The Fischer-Tropsch process according to the present invention can be carried out in a slurry phase regime or an ebullating bed regime, wherein the catalyst particles are kept in suspension by an upward superficial gas and/or liquid velocity.

Another regime for carrying out the Fischer-Tropsch process is a fixed bed regime, especially a trickle flow regime. A very suitable reactor is a multitubular fixed bed reactor. In addition, the Fischer-Tropsch process may also be carried out in a fluidised bed process.

Fischer-Tropsch catalysts are known in the art, and frequently comprise, as the catalytically active component, a metal from Group VIII of the Periodic Table. (References herein to the Periodic Table relate to the previous IUPAC version of the Periodic Table of Elements such as that described in the 68th Edition of the Handbook of Chemistry and Physics (CPC Press)). Particular catalytically active metals include ruthenium, iron, cobalt and nickel. Cobalt is a preferred catalytically active metal.

The optimum amount of catalytically active metal present on the carrier depends inter alia on the specific catalytically active metal. Typically, the amount of cobalt present in the catalyst may range from 1 to 100 parts by weight per 100 parts by weight of carrier material, preferably from 3 to 50 parts by weight per 100 parts by weight of carrier material.

The catalytically active metal may be present in the catalyst together with one or more metal promoters or cocatalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB, VIIB and/or VIIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. Preferred metal promoters include rhenium, manganese, iron, platinum and palladium.

The promoter, if present in the catalyst, is typically present in an amount of from 0.001 to 100 parts by weight per 100 parts by weight of carrier material, preferably 0.05 to 20, more preferably 0.1 to 15. It will however be appreciated that the optimum amount of promoter may vary for the respective elements which act as promoter.

A most suitable catalyst comprises cobalt as the catalytically active metal and zirconium as a promoter. Another most suitable catalyst comprises cobalt as the catalytically active metal and manganese and/or vanadium as a promoter.

The catalytically active metal is preferably supported on a porous carrier. The porous carrier may be selected from any of the suitable refractory metal oxides or silicates or combinations thereof known in the art. Particular examples of preferred porous carriers include silica, alumina, titania, zirconia, ceria, gallia and mixtures thereof, especially silica and titania.

The catalytically active metal and the promoter, if present, may be deposited on the carrier material by any suitable treatment, such as impregnation, kneading and extrusion. After deposition of the metal and, if appropriate, the promoter on the carrier material, the loaded carrier is typically subjected to drying and/or to calcination at a temperature of generally from 350 to 750 °C, preferably a temperature in the range of from 450 to 550 °C. The effect of the calcination treatment is to remove crystal water, to decompose volatile decomposition products and to convert organic and inorganic compounds to their respective oxides. After calcination, the resulting catalyst is usually activated by contacting the catalyst with hydrogen or a hydrogen-containing gas, typically at temperatures of about 200 to 450 °C.

Products of the Fischer-Tropsch synthesis may range from methane to heavy paraffin waxes. Preferably, the production of methane is minimised and a substantial portion of the hydrocarbons produced have a carbon chain length of a least 5 carbon atoms. Preferably, the amount of C₅+ hydrocarbons is at least 60% by weight of the total product, more preferably, at least 70% by weight, even more preferably, at least 80% by weight, most preferably at least 85% by weight.

The hydrocarbons produced in the process are suitably C₃₋₂₀₀ hydrocarbons, more suitably C₄₋₁₅₀ hydrocarbons, especially C₅₋₁₀₀ hydrocarbons, or mixtures thereof. These hydrocarbons or mixtures thereof are liquid or solid at temperatures between 5 and 30°C (1 bar), especially at about 20 °C (1 bar), and usually are paraffinic of nature, while up to 30 wt%, preferably up to 15 wt%, of either olefins or oxygenated compounds may be present.

Depending on the catalyst and the process conditions used in a Fischer-Tropsch reaction, various proportions of normally gaseous hydrocarbons, normally liquid hydrocarbons and optionally normally solid hydrocarbons are obtained. It is often preferred to obtain a large fraction of normally solid hydrocarbons. These solid hydrocarbons may be obtained up to 90 wt% based on total hydrocarbons, usually between 50 and 80 wt%.

Preferably, a Fischer-Tropsch catalyst is used, which yields substantial quantities of paraffins, more preferably substantially unbranched paraffins. A part may boil above the boiling point range of the so-called middle distillates. The term "middle distillates", as used herein, is a reference to hydrocarbon mixtures of which the boiling point range corresponds substantially to that of kerosene and gasoil fractions obtained in a conventional atmospheric distillation of crude mineral oil. The boiling point range of middle distillates generally lies within the range of about 150 to about 360 °C.

The higher boiling range paraffinic hydrocarbons, if present, may be isolated and subjected to a catalytic hydrocracking step, which is known per se in the art, to yield the desired middle distillates. The catalytic hydro-cracking is carried out by contacting the paraffinic hydrocarbons at elevated temperature and pressure and in the presence of hydrogen with a catalyst containing one or more metals having hydrogenation activity, and supported on a carrier comprising an acidic function. Suitable hydrocracking catalysts include catalysts comprising metals selected from Groups VIB and VIII of the (same) Periodic Table of Elements. Preferably, the hydrocracking catalysts contain one or more noble metals from Group VIII. Preferred noble metals are platinum, palladium, rhodium, ruthenium, iridium and osmium. Most preferred catalysts for use in the hydro-cracking stage are those comprising platinum.

The amount of catalytically active noble metal present in the hydrocracking catalyst may vary within wide limits and is typically in the range of from about 0.05 to about 5 parts by weight per 100 parts by weight of the carrier material. The amount of non-noble metal present is preferably 5-60%, preferably 10-50%.

Suitable conditions for the catalytic hydrocracking are known in the art. Typically, the hydrocracking is effected at a temperature in the range of from about 175 to 400 °C. Typical hydrogen partial pressures applied in the hydrocracking process are in the range of from 10 to 250 bar.

The product of the hydrocarbon synthesis and consequent hydrocracking suitably comprises mainly normally liquid hydrocarbons, beside water and normally gaseous hydrocarbons. By selecting the catalyst and the process conditions in such a way that especially normally liquid hydrocarbons are obtained, the product obtained ("syncrude") may be transported in the liquid form or be mixed with any stream of crude oil without creating any problems as to solidification and or crystallization of the mixture. It is observed in this respect that the production of heavy hydrocarbons, comprising large amounts of solid wax, are less suitable for mixing with crude oil while transport in the liquid form has to be done at elevated temperatures, which is less desired.

Thus the invention also provides hydrocarbon products synthesised by a Fischer-Tropsch, wherein tail gas from the Fischer-Tropsch process has been processed as described herein.

The hydrocarbon may be a hydrocarbon removed from the Fischer-Tropsch reaction vessel as a liquid or waxy stream.

The hydrocarbon may be a hydrocarbon removed from the FT tail gas.

The hydrocarbon may have undergone the steps of hydroprocessing, preferably hydrogenation, hydroisomerisation and/or hydrocracking.

The hydrocarbon may be a fuel, preferably naphtha, kerosene or gasoil, a waxy raffinate or a base oil.

Any percentage mentioned in this description is calculated on total weight or volume of the composition, unless indicated differently. When not mentioned, percentages are considered to be weight percentages. Pressures are indicated in bar absolute, unless indicated differently.

An embodiment of the present invention will now be described, by way of example only, with reference to the accompanying drawing in which Fig. 1 is a schematic view of selected components of a Fischer-Tropsch plant.

In the FT process, syngas (H₂:CO ratio = 1.7-1.9) is converted over a cobalt containing catalyst at 220-250 °C and 40-60 bara.

The plant 10 comprises a Fischer-Tropsch (FT) reactor 12 which receives syngas 11 and produces a waxy product 13 comprising mainly C₂₀+ hydrocarbons, a light hydrocarbonaceous product stream comprising mainly C₅-C₂₀ hydrocarbons (not shown), a water stream (not shown), and a FT product gas 14.

The product gas is cooled from around 220-250 °C by a high temperature cooler 16 to around 130 °C and a low temperature cooler 18 to around 60 °C. A portion of the untreated FT product gas 14 is recycled back to the FT reactor 12 via line 19.

The remaining product gas (i.e. a bleedstream) is introduced into a scrubber 20 and is contacted with hydrocarbon wash fluids. The hydrocarbon wash fluid is a FT gasoil stream or kerosene. C₃-C₆ components in the FT tail gas proceed with the wash fluid out of the bottom of the scrubber 20 to the distillation unit 22, where they are separated. The remaining FT product gas 21 proceeds out of the top of the scrubber 20 for onward processing and/or use.

A bleedstream 24 of wash fluid is provided with additional wash fluid being introduced at 23.

Thus embodiments of the present invention benefit in that the C₃-C₆ components within the FT tail gas may be recovered and used more usefully. C₃ and C₄ may be used in liquid petroleum gas (LPG) whilst C₅ and C₆ may be used in naphtha.

Improvements and modifications may be made without departing from the scope of the invention.

## Claims

1. A process for the treatment of Fischer-Tropsch tail gas comprising hydrocarbons, the process comprising:
- contacting the Fischer-Tropsch tail gas with a wash fluid,
- removing the wash fluid and a portion of the hydrocarbons in the tail gas, in a first stream;
- removing the remaining tail gas in a second separate stream;
- separating said tail gas component from the first stream.

2. A process as claimed in claim 1, wherein said tail gas component comprises C₃-C₉ hydrocarbons, especially C₄-C₇ hydrocarbons.

3. A process as claimed in either preceding claim, wherein at least 70 wt%, more preferably at least 90 wt% of C₃-C₉ hydrocarbons, especially at least 70 wt%, more preferably at least 90 wt% of C₄-C₇ hydrocarbons, in the Fischer-Tropsch tail gas stream are separated therefrom.

4. A process as claimed in any preceding claim, wherein the Fischer-Tropsch tail gas is cooled before contact between the tail gas and the wash fluid.

5. A process as claimed in claim 4, wherein the Fischer-Tropsch tail gas is at a temperature of 0-50 °C, preferably 10-40 °C when it contacts the wash fluid.

6. A process as claimed in any preceding claim, wherein the Fischer-Tropsch tail gas is contacted with the wash fluid in a scrubber and the Fischer-Tropsch tail gas passes through the scrubber only once.

7. A process as claimed in claim 6, wherein the wash fluid is circulated through the scrubber more than once.

8. A process as claimed in any preceding claim, wherein the tail gas component in the first stream is separated from the wash fluid by distillation.

9. A process as claimed in any preceding claim, wherein any unsaturated components within the recovered tail gas component are subsequently hydrogenated.

10. A process as claimed in any preceding claim, wherein the initial boiling point of the wash fluid is higher than 80 °C, more preferably higher than 100 °C.

11. A process as claimed in any preceding claim, wherein the wash fluid comprises hydrocarbons.

12. A process as claimed in claim 11, wherein the wash fluid comprises at least 90 wt% C₅-C₂₀ hydrocarbons, more preferably at least 90 wt% C₈-C₂₀, even more preferably at least 90 wt% C₁₀-C₂₀.

13. A process as claimed in claim 11 or claim 12, wherein the wash fluid is one of kerosene and gasoil.

14. A process as claimed in any preceding claim, wherein the process includes the production of C₅+ hydrocarbons.

15. A process as claimed in claim 14, wherein the process to produce C₅+ hydrocarbons is a Fisher Tropsch process.

16. A process as claimed in claim 14 or claim 15, wherein the wash fluid comprises hydrocarbons produced by the process to produce _{C5}+ hydrocarbons, preferably after a hydrocracking and optionally hydrogenation step.

17. A process as claimed in any one of claims 14 to 16, wherein the amount of C₅-C₉ components recovered in the first stream is 1-3% of total C₅+ output of the process.

18. A process as claimed in any preceding claim, wherein the separating step is performed at a lower pressure than the contacting step.

19. A hydrocarbon product synthesised by a Fischer-Tropsch, wherein tail gas from the Fischer-Tropsch process has been treated in a process as claimed in any preceding claim.

20. A hydrocarbon product as claimed in claim 19, which is recovered as a liquid or waxy stream from a Fischer-Tropsch reaction vessel.

21. A hydrocarbon product as claimed in claim 19, which is recovered from the Fischer-Tropsch tail gas.

22. A hydrocarbon product as claimed in one of claims 19 to 20, wherein the hydrocarbon product has undergone the steps of hydroprocessing, preferably hydrogenation, hydroisomerisation and/or hydrocracking.

23. A hydrocarbon product as claimed in one of claims 19 to 21, wherein the hydrocarbon product is a fuel, preferably naphtha, kerosene or gasoil, a waxy raffinate or a base oil.
